## Europäisches Patentamt
## European Patent Office
## Office européen des brevets

(19)

(11) Publication number: **0 191 985**
A2

(12) **EUROPEAN PATENT APPLICATION**

(21) Application number: **85308889.6**

(22) Date of filing: **06.12.85**

(51) Int. Cl.⁴: **B 01 D 53/18**

(30) Priority: **27.12.84 GB 8432657**

(43) Date of publication of application:
**27.08.86 Bulletin 86/35**

(84) Designated Contracting States:
**BE DE FR GB IT NL SE**

(71) Applicant: **IMPERIAL CHEMICAL INDUSTRIES PLC**
**Imperial Chemical House Millbank**
**London SW1P 3JF(GB)**

(72) Inventor: **Langley, Philip Edward**
**Temple House**
**Carlton in Cleveland(GB)**

(72) Inventor: **Locke, Timothy John**
**9 Rosehill**
**Great Ayton North Yorkshire(GB)**

(74) Representative: **Locke, Timothy John et al,**
**Imperial Chemical Industries PLC Legal Department:**
**Patents Bessemer Road PO Box 6**
**Welwyn Garden City Hertfordshire, AL7 1HD(GB)**

(54) **Treatment of gas mixtures.**

(57) $CO_2$ is separated from a gas mixture by passing the mixture through a first gas/liquid contact zone co-currently with a liquid absorbent for $CO_2$, passing the gas mixture after treatment in the first contact zone through a second gas/ liquid contact zone co-currently with a liquid absorbent for $CO_2$, and passing the liquid absorbent from the second absorption zone to the first absorption zone.

*Fig.2.*

## TREATMENT OF GAS MIXTURES

This invention relates to the treatment of gas mixtures.

It is known, for example from British patent specification 725,000, to remove carbon dioxide from a gas mixture containing it by scrubbing it in an absorption zone at superatmospheric pressure with an aqueous alkaline solution capable of absorbing carbon dioxide, for example a potassium carbonate solution (which forms potassium bicarbonate in the process), and regenerating the solution for reuse. This was done by by passing the solution to a regeneration zone maintained at a lower pressure in which carbon dioxide flashed off and was removed, and boiling or stream stripping the solution to remove further $CO_2$.

Treatment of this type may be carried out on process streams produced in oxidation processes, for example the oxidation of ethylene to ethylene oxide, in which part of the reactant is oxidised to carbon dioxide and in which it is desired to recycle unconverted reactants to the process. Suitably the desired product is first removed from the mixture produced by the reaction, and at least part of the remaining mixture is treated to remove carbon dioxide before recycling the remainder to the reaction. By this means a build-up of carbon dioxide in the reaction is prevented.

Because of the cost of carbon dioxide removal it has been the practice in some processes to treat only a small proportion of the mixture to remove an amount of carbon dioxide equal to that produced in each pass of the reactants through a reactor which is operated at a high inlet level of $CO_2$. If carbon dioxide is inert in the reaction this procedure is very satisfactory since any given absorber has a limited gas throughput rate and in general the higher the $CO_2$ content of the gas the greater the effectiveness of the absorber in removing it. By this procedure therefore the treatment costs are reduced but the reaction is carried out at relatively high levels of $CO_2$.

It is however not always the case that $CO_2$ is inert. A compromise must then be reached between the costs of reducing the $CO_2$ concentration and the costs of any detrimental effect of the $CO_2$ in the process.

This may present a problem if for example an existing oxidation process plant is uprated by increasing the pass conversion, for example by the use of a more active catalyst, and the $CO_2$ removal proces has to be debottlenecked in consequence in order to maintain a similar concentration of $CO_2$ in the recycle stream whilst removing more $CO_2$ in total.

There is also a need for an improved process of removing $CO_2$ in which the concentration of $CO_2$ is reduced in such reactions without substantially increasing the cost of $CO_2$ recovery or the total amount of $CO_2$ recovered.

It would of course be possible simply to treat a larger proportion of the gas and to increase the size of the absorber accordingly. However, this procedure is plainly expensive. An alternative which enables the plant to operate at lower $CO_2$ levels without requiring an increase in absorber capacity would clearly be advantageous. If this could be combined with a procedure which left the liquid flows and composition of the absorbent before and after the absorption steps unchanged any apparatus and procedures for regeneration of the absorbent could remain unchanged and the modification of existing plant would be simplified.

This invention comprises a process of separating $CO_2$ from a gas mixture by passing a gas mixture to be treated through a first gas/liquid contact zone co-currently with a liquid absorbent for $CO_2$, passing the gas mixture after treatment in the first contact zone through a second gas/liquid contact zone co-currently with a liquid absorbent for $CO_2$, and passing liquid absorbent from the said second zone to the said first zone.

Suitably more than two, for example 3 to 5 similar zones are provided, and the gas mixture and the liquid absorbent are passed through each of the zones in the opposite order, that is, with n zones if the gas mixture is passed through the zones in numerical order 1, 2, ....n the liquid absorbent is passed through in the opposite order n, n-1, ....1.

The absorption zones can operate at similar pressures and can readily be accommodated within a single pressure vessel which can be divided for this purpose. This is particularly valuable when the modification of existing plants which comprises such a vessel is contemplated. If desired, the zones may be accommodated in different pressure vessels however.

The absorption zones may comprise plates, but suitably comprise random packing which may be of known type, for example Raschig rings, Pall rings or Berl saddles or ordered packing, for example Sulzer foil packing.

If the quantity of $CO_2$ absorbed by the absorbent is the same before and after the conversion the composition of the absorbent fed to the absorbent zones and recovered from them can be the same as before and thus any regeneration procedure remains the same.

If the invention is used as a means of increasing the amount of $CO_2$ removed from a process whilst maintaining similar $CO_2$ levels in a recycled gas stream any absorbent regenerations ie $CO_2$ removal stage must of course remove more $CO_2$. As such a stage is normally overdesigned and carried out at moderate pressures this is unlikely to represent a major problem in many cases, typically involving merely passing more steam through it to remove the greater quantities of $CO_2$.

The absorbent may be one of the many known in the art and is suitably a solution of potassium carbonate/bicarbonate in water, optionally with additives. In this case the ratio of $CO_2$ content to $K_2O$ content at the inlet is suitably 1.1 to 1.2 and at the outlet 1.2 to 1.9 and preferably 1.2 to 1.5. The difference between these values is preferably 0.1 to 0.7. The use of absorbents which comprise volatile components may be undesirable if their vapours would be passed back to a process which would be unfavourably affected.

Suitably the absorption stage is carried out at a similar temperature to that of the regeneration stage in order to avoid the need for heating and cooling between the stages. The absorption stage is preferably at an elevated pressure and the regeneration stage is suitably carried out at about atmospheric pressure or slightly above

0191985

in order to allow the maximum pressure difference between the regeneration and absorption stages without the need to operate the regeneration zone at a reduced pressure and thus the greatest difference in $CO_2$ content of the absorbent between the inlet and outlet of the absorption zones. The temperature is suitably below but near the boiling point of the absorbent under the pressure the regeneration stage in order to permit effective absorption of $CO_2$ without undue losses of components of the absorbent by evaporation. If the absorbent is an aqueous solution the temperature in the absorption stages is suitably 80-120 and preferably 90-110°C.

The temperature in the regeneration stage is suitably 90 to 130°C and preferably 100-120°C at pressures of for example 1 to 2 bars absolute, losses of water from either stage being regarded as tolerable and readily made up.

Pressures in the absorption zones are preferably as high as possible, but very suitably if possible match the pressures used in the process from which the gas to be treated originates in order to avoid the need to compress and decompress the gas between the $CO_2$ removal stage and the process. In treating gases derived from a process for the production of ethylene oxide by oxidising ethylene with molecular oxygen over a heterogeneous catalyst, the pressure in the absorber is suitably 10 to 30, for example 10 to 20 bars absolute. For effective operation of the $CO_2$ removal stage the pressure difference between the absorption zones and the regeneration stage should be at least five bars.

One form of the invention will now be described with reference to the accompanying drawings of which figures 1 and 2 show schematic representations of a process respectively before and after conversion to conform to the invention, figure 3 shows a cross-section through an absorber for use in the invention and figure 4 shows a view of a liquid distributor for use in the absorber.

An ethylene oxide plant (1) which converts a stream comprising ethylene and oxygen in the presence of ballast gas (mainly methane) and a chlorine containing inhibitor to ethylene oxide by contacting it with a catalyst comprising silver on a support by partial oxidation of the ethylene, and recovers ethylene oxide from the product, leaves a gas stream containing ethylene, oxygen, ballast gases and $CO_2$ produced by total oxidation of part of the ethylene.

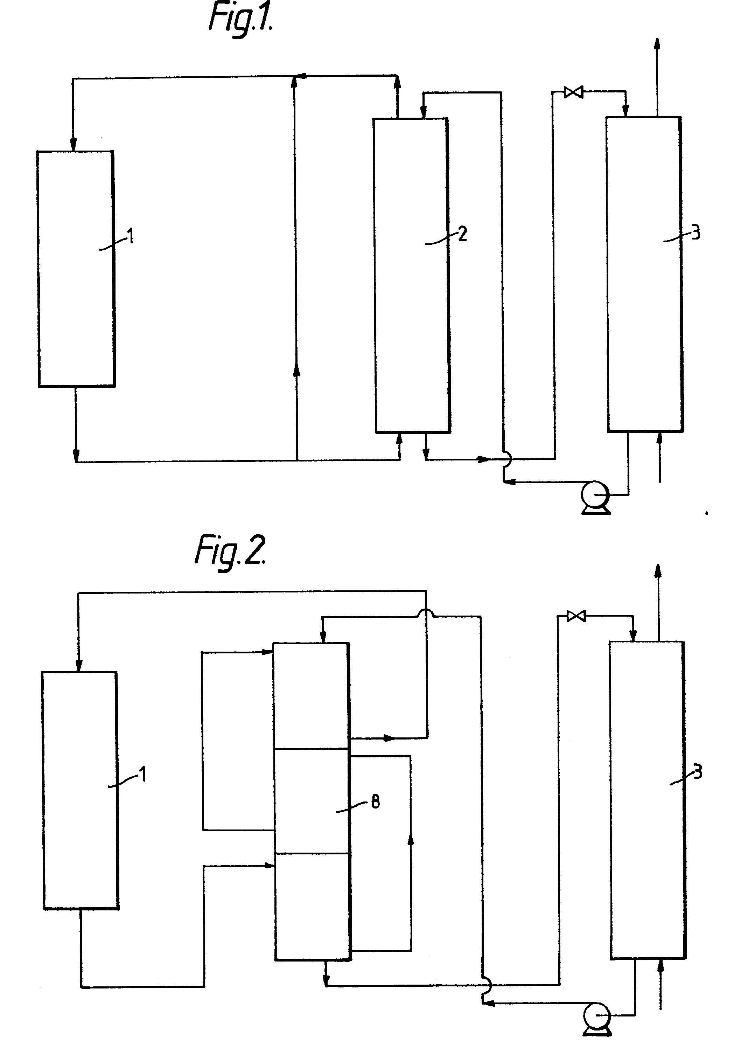

In Figure 1, one third of this gas stream is passed countercurrently in a packed absorber (the packing being pall rings) (2) to a flow of a solution containing 30% $K_2CO_3$ in water which contains a 15% stoichiometric excess of $CO_2$, (i.e. molar ratio of $CO_2$ to $K_2O = 1.15$) at a pressure of 15 bars absolute and at a temperature of 110°C.

The solution emerging from the absorber contains a 29% stoichiometric excess of $CO_2$ and is passed to a regeneration zone (3) in which the pressure is reduced to 1 bar absolute and the temperature maintained at 110°C and steam blown through. The stoichiometric excess of $CO_2$ in the solution is thereby reduced to 15% and it is fed back to the absorber (2).

The $CO_2$ content of the gas mixture passing through the absorber is reduced from 2.7% to 0.3% and the gas returned to the reaction by admixture of this with the unprocessed gas has a $CO_2$ content of 1.9%.

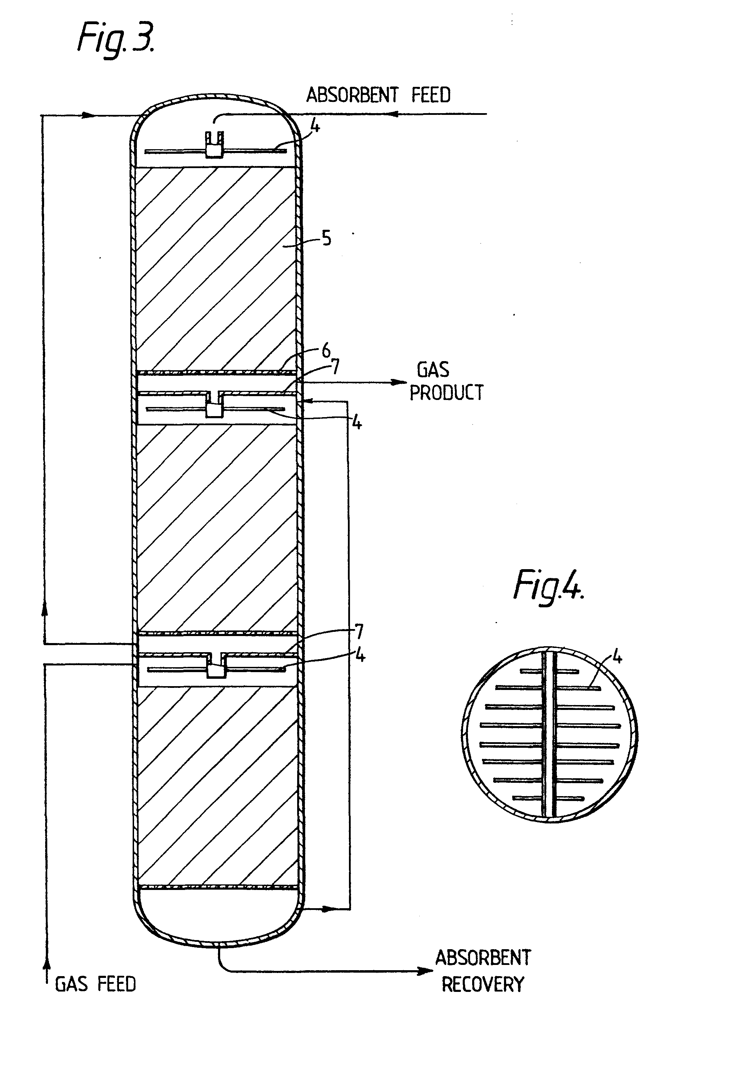

In the converted plant shown in fig. 2 the absorber (2) is divided into 3 zones as shown in fig. 3. Liquid distributors (4) shown in figure 4 spray liquid from side arms over the top of each bed of packing (comprising pall rings) (5) at the bottom of which is a support grid (6), and under the top two beds, a partition (7) to separate gas streams which also collects absorbent liquid and feeds the relevant liquid distributors. Pipework is arranged to feed the zones as shown with gas and liquid.

The whole of the gas mixture from plant (1) is fed to the top of the bottom absorption zone of absorber 8 and it is passed co-currently with the absorbent solution through the bed and passed from the bottom of this zone to the top of the middle zone, recovered from the bottom of the middle zone, passed to the top of the top zone and recovered from the bottom of the top zone. By this means the whole of the gas mixture is passed co-currently with the absorbent liquid through three absorption zones in which the $CO_2$ content of the absorbent is lower in each successive zone. If the conditions of pressure, temperature and absorbent composition at the inlet and outlet from the modified absorber 8 are maintained unchanged, and the production of $CO_2$ in each pass through plant 1 is maintained unchanged, the $CO_2$ content of the gas fed to the absorber is 1.6%, that of the gas emerging from the bottom zone is 1.3%, that of the gas emerging from the middle zone is 1.02% and that of the gas emerging from the top zone is 0.8%.

Operation of the regeneration zone (3) remains unchanged. The $CO_2$ content of the gas fed to and recovered from the plant (1) is thus reduced by 1.1%.

All of the above percentages of gases are by volume.

Claims

1.      A process of separating $CO_2$ from a gas mixture comprising $CO_2$ by passing the gas mixture to be treated through a first gas/liquid contact zone co-currently with a liquid absorbent for $CO_2$, passing the gas mixture after treatment in the first contact zone through a second gas/liquid contact zone co-currently with a liquid absorbent for $CO_2$, and passing liquid absorbent from the said second zone to the said first zone.

2.      A process as claimed in claim 1 in which the gas/liquid contact zones operate at similar pressures and are accommodated within a single pressure vessel.

3.      A process as claimed in claim 1 or 2 in which 3 to 5 gas/liquid contact zones are used, the gas mixture and liquid absorbent being passed through each of the zones in the opposite order.

4.      A process as claimed in any preceding claim in which absorbent recovered from the first gas/liquid contact zone is regenerated and recycled to the last gas/liquid contact zone.

5.      A process as claimed in claim 4 in which the separation of $CO_2$ and the regeneration of the absorbent take place at a similar temperature.

6.      A process as claimed in claim 5 in which the separation of $CO_2$ takes place at elevated pressure and in which regeneration of the absorbent takes place at or slightly above atmospheric pressure.

7.      An oxidation process in which part of a reactant is oxidised to a product and part to $CO_2$ in an oxidation stage and in which unconverted reactant is recycled to the oxidation stage after removal of product, in which, after the said removal of product at least part of a remaining gas mixture containing unconverted reactant is treated to remove $CO_2$ by a process as claimed in any preceding claim before recycling reactant to the oxidation stage.

8.      A process as claimed in claim 7 in which the $CO_2$ separation is carried out at a similar pressure to that of the oxidation stage.

9.      A process as claimed in claim 7 or 8 which comprises oxidising ethylene to ethylene oxide.

10.     A pressure vessel for carrying out a process as claimed in any preceding claim which comprises at least two gas/liquid contact zones which are adapted to be operated at similar pressures, means for flowing a stream of liquid absorbent for $CO_2$ downwardly through each of the zones in series and means for flowing a gas mixture co-currently with the liquid absorbent for $CO_2$ through each of the zones in order starting with the bottom zone and ending with the top zone.

Fig.1.

Fig.2.

0191985

1/2

**Fig.3.**

ABSORBENT FEED

GAS PRODUCT

GAS FEED

ABSORBENT RECOVERY

**Fig.4.**